(19) Europäisches Patentamt
European Patent Office
Office européen des brevets

(11) Numéro de publication: **0 034 970**
**B1**

(12) **FASCICULE DE BREVET EUROPEEN**

(45) Date de publication du fascicule du brevet: **07.09.83**

(51) Int. Cl.³: **C 08 K 5/00**, C 08 K 9/04, C 08 L 101/00, C 08 L 57/00

(21) Numéro de dépôt: **81400221.8**

(22) Date de dépôt: **13.02.81**

(54) **Procédé de couplage entre un élastomère et une charge notamment à base d'un composé de la silice.**

(30) Priorité: **25.02.80 FR 8004037**

(43) Date de publication de la demande: **02.09.81 Bulletin 81/35**

(45) Mention de la délivrance du brevet: **07.09.83 Bulletin 83/36**

(84) Etats contractants désignés: **AT BE DE FR GB IT LU NL**

(56) Documents cités: **FR-A-2 273 014**

(73) Titulaire: **RHONE-POULENC CHIMIE DE BASE, 25, quai Paul Doumer, F-92408 Courbevoie (FR)**

(72) Inventeur: **Machurat, Jean, 8, rue Descartes, F-69250-Neuville/s/Saone (FR)**
Inventeur: **Morawski, Jean-Claude, 10, rue des Primevères, F-69680-Chassieu (FR)**
Inventeur: **Soula, Gérard, 33, rue Nungesser, F-69330-Meyzieu (FR)**

(74) Mandataire: **Martin, Henri et al, RHONE-POULENC RECHERCHES Service Brevets Chimie et Polymères 25, quai Paul Doumer, F-92408 Courbevoie Cedex (FR)**

**EP 0 034 970 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Procédé de couplage entre un élastomère et une charge notamment à base d'un composé de la silice

La présente invention a pour objet un procédé de couplage entre un élastomère et une charge notamment à base d'un composé de la silicie.

Il est connu depuis longtemps que les silices de précipitation ont un bon pouvoir renforçant c'est-à-dire qu'elles améliorent les caractéristiques technologiques (telles que Résistance rupture, Dureté, module, Résistance à l'abrasion, Résistance au déchirement, etc. . . .). des vulcanisats.

Cependant, les vulcanisats renforcés avec les silices commerciales ont plusieurs points d'infériorité par rapport à ceux qui sont chargés avec les meilleurs noirs de carbone:

- Résistance plus faible à l'abrasion,
- Rémanence plus élevée après déformation,
- Dissipation d'énergie plus élevée, donc échauffement plus fort sous contrainte dynamique.

On a donc proposé diverses voies pour améliorer le niveau de comportement des élastomères chargés à la silice.

Une voie recherchée pour palier ces insuffisances consiste à améliorer la liaison charge — élastomère, et ce en faisant appel à un agent de liaison ou agent de couplage.

Toutefois, ceci nécessite de sélectionner un agent de couplage à la fois bon marché et efficace, sans compter qu'il ne doit pas lui-même apporter des inconvénients inhérents à sa nature.

L'efficacité des agents de couplage de la famille des silanes et en particulier des mercapto-silanes est connue. Elle a été décrite dans la littérature, en particulier:

- Rubber World Oct. 70 p. 53—58 ou European Rubber Journal March 74 37—46.

Malheureusement, leur développement se heurte à deux inconvénients majeurs, d'une part leurs prix, qui dans l'état actuel des choses est très élevé par rapport à celui de la charge proprement dite, et d'autre part leur odeur qui en proscrit l'usage dès que l'on dépasse pratiquement le seuil de 1% en poids par rapport à l'élastomère.

Mais maintenant on a trouvé, et c'est ce qui fait l'objet de la présente invention que l'on peut obvier à ces défauts en faisant appel à un nouveau procédé de couplage caractérisé par le fait que l'on met en oeuvre au moins un dérivé à base de silane et au moins un succinimide.

Les silanes selon l'invention répondent à la formule générale:

$$R'-Si(OR)_3$$

dans laquelle R' = groupe organique réactif tel que mercapto, azo, généralement relié par une courte chaine alkylène à l'atome de silicium.

OR = groupe alkoxy hydrolysable.

Les silanes selon l'invention sont notamment des silanes soufrés du type: gamma-mercaptopropyltriméthoxysilane ou bis-(3-triethoxysilylpropyl)-tétrasulfure.

Mais on peut aussi faire appel à des silanes dont le groupe réactif est un carbamoylazoformate.

On peut encore citer à titre d'exemple les formules suivantes:

- tétrasulfure de di(méthylpropyldiéthoxysilane)
- hexaméthylcyclotrisilthiane
- polysulfure d'éthyltriéthoxysilane
- monosulfure de di-méthylpropyléthoxysilane.

Les succinimides selon l'invention sont à base d'alcénylsuccinimides obtenus par condensation d'une polyamine sur un anhydre alcényl-succinique dont le radical alcényle contient de 3 à 100, de préférence de 3 à 12 atomes de carbone.

Parmi les polyamines pouvant être utilisées pour obtenir les alcénylsuccinimides on peut citer:

I — les polyalkylène amines dont les radicaux alkylènes sont linéaires ou ramifiés et contiennent de 2 à 12 atomes de carbone, lesdites polyalkylène amines étant èventuellement substituées sur l'azote par un ou des radicaux hydroxyalcoyles ou aminoalcoyles.

II — les polyoxaalkylène amines dont les radicaux oxaalkylènes sont linéaires ou ramifiés et contiennent de 2 à 3 atomes de carbone.

III — les amines tertiaires aminoalcoylées répondent à la formule générale:

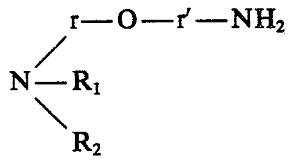

où r représente un radical éthylène ou propylène

r' représente un radical triméthylène ou propylène
$R_1$ représente un radical $-r-O-r'-NH_2$ ou $-r'-NH_2$
$R_2$ représente un radical $-r-O-r'-NH_2$ ou $-r'-NH_2$
-alcoyle en $C_2-C_4$ ou phényle.

I — Comme exemples de polyalkylène amines non substituées on peut citer:

- les méthylène amines telles que triméthylène diamine, tétraméthylène diamine, pentaméthylène diamine, hexaméthylène diamine, heptaméthylène diamine, octaméthylène diamine, nonaméthylène diamine, décaméthylène diamine, di(triméthylène)triamine, di(hexaméthylène) triamine.
- les éthylène amines telles que éthylène diamine, diéthylène triamine, triéthylène tétramine, tétraéthylène pentamine, pentaéthylène hexamine.
- les propylène amines telles que la propylène diamine, la dipropylène triamine, la tripropylène tétramine,
- leurs homologues cycliques du type aminoalcoylpipérazines telles que 1,4 bis(2-aminoéthyl)pipérazine, 1,4 bis(4-aminobutyl)pipérazine.

Les éthylène polyamines sont spécialement utiles. Elles sont décrites d'une manière assez détaillée sous le titre »Diamines and Higher Amines« dans »Encyclopedia of Chemical Technology«, 2ème édition, Kirk et Othmer, Volume 7, pages 27—39, Interscience Publishers, New York (1965). Elles peuvent être utilisées seules ou en mélange entre elles ou avec leurs homologues cycliques.

Comme exemples de polyalkylène amines substituées sur l'azote par un ou des groupes hydroxyalcoyles, on peut citer celles dont le ou les groupes hydroxyalcoyles contiennent moins de 8 atomes de carbone telles que:

N-(2-hydroxyéthyl)-éthylène diamine, N,N-bis(2-hydroxyéthyl)éthylène diamine, mono-hydroxypropyldiéthylène triamine, di-hydroxypropyltétraéthylène pentamine, N-(3-hydroxypropyl) tétraméthylène diamine.

Comme exemples de polyalkylène amines substituées sur l'azote par un ou des groupes aminoalcoyles, on peut citer celles dont le ou les groupes aminoalcoyles contiennent moins de 4 atomes de carbone telles que:

la tris(2-aminoéthyl)amine, les N(2-aminoéthyl)tétraéthylène pentamine, la N,N,N' tris(3-aminopropyl)éthylène diamine, la N,N,N,N' tétrakis(3-aminopropyl)éthylène diamine, la N(3-aminoéthyl) triméthylène diamine.

II — Comme exemples de polyoxaalkylène amines on peut citer:
- le diamino-1,10 dioxa-4,7 décane
- le diamine 1,13 trioxa 4,7,10 tridécane
- le diamine-1,8 dioxa-3,6 triméthyl 1,5,8 octane
- le tris(amino-2 méthyl-2 éthoxy)-1,2,3 propane

D'autres exemples de polyoxaalkylène amines pouvant être utilisés sont décrites dans FR-A-1 547 228.

III — Comme exemples d'amines tertiaires aminoalcoylées pouvant être utilisées, on peut citer celles décrites dans FR-A-2 307 795, et en particulier:

- la tris(oxa-3 amino-6 hexyl)amine
- la N éthyl bis (oxa-3 amino-6 hexyl) amine.

Parmi les anhydrides alcénylsucciniques pouvant être mis en oeuvre pour préparer les alcénylsuccinimides, on peut citer ceux dont le radical alcényle dérive d'une mono oléfine en $C_3-C_{30}$, d'un oligomère ou d'un polymère d'une mono oléfine en $C_2-C_{20}$ ou d'un copolymère desdites oléfines entre elles ou avec des comonomères diéniques ou vinylaromatiques. On peut citer de préférence les anhydrides alcénylsucciniques dérivés d'oligomères ou de polymères de l'éthylène, du propylène, du

butène-1, de l'isobutène, du cyclohexyl-3 butène-1, du méthyl-2 propyl-5 hexène-1.

Les anhydrides alcénylsucciniques peuvent être préparés d'une manière connue par condensation de l'anhydride maléique sur une oléfine, un oligomère, un polymère ou un copolymère de ladite oléfine; cette opération peut être réalisée par voie thermique (US-A-3 306 907) ou bien en présence de chlore (US-A-3 231 587) ou de brome (FR-A-2 273 014); cette opération peut être aussi réalisée au départ de polyoléfines monochlorées ou monobromées tel que cela est signalé dans FR-A-2 042 558.

L'opération de condensation de l'anhydride alcénylsuccinique sur la polyamine mise en oeuvre pour préparer l'alcénylsuccinimide est réalisée d'une manière connue à une température comprise entre 80 et 250° C (US-A-3 172 892, US-A-3 219 666, FR-A-2 307 845).

Cette opération est réalisée de préférence à une température comprise entre 120 et 240° C, tout particulièrement entre 130 et 230° C, avec un rapport molaire polyamine/anhydride alcénylsuccinimique inférieur à 1.

Lorsque l'amine mise en oeuvre contient deux groupements amino primaire, un rapport molaire compris entre 0,4 et 0,6 permettra d'obtenir des compositions comportant une majeure partie de bis alcényle succinimides; un rapport molaire voisin de 1 de préférence compris entre 0,7 et 0,95, permettra d'obtenir des compositions contenant une majeure partie de mono alcényl succinimides. Lorsque l'amine contient 3 groupements amino primaires, un rapport molaire compris entre 0,2 et 0,4 permettra d'obtenir un tris succinimide.

Selon un mode de réalisation dans la formule à base d'élastomère, on remplace au moins la moitié du silane par au moins un succinimide et de préférence on met en oeuvre au moins deux, avantageusement trois parties en poids de succinimide pour une partie en poids de silane. Selon l'invention, de manière avantageuse, l'on apporte au moins 4 parties en poids de la composition selon l'invention pour 100 parties de silice.

Les éléments de la composition peuvent être amenés ensemble ou séparément.

La matière additionnée de charge est de toute nature polymérique, elle peut être constituée par un matériau élastomérique, tel que caoutchouc naturel ou SBR.

On sait que dans les matériaux élastomériques tels que les copolymères de styrène butadiène (SBR), caoutchoucs naturels, on ajoute généralement de 1 à 60 parties en poids d'huile pour 100 parties d'élastomères.

Selon l'invention, il suffit de quelques pour cent, en particulier de 1 à 5% en poids par rapport au plastifiant pour obtenir des résultats significatifs.

La charge selon l'invention est notamment constituée par une charge minérale, naturelle ou synthétique.

Parmi celles-ci on peut citer de manière non limitative les charges à base de silices et de silicates synthétiques.

Plus particulièrement la présente invention s'adresse aux silices précipitées.

Celles-ci peuvent être obtenues par diverses familles de procédés.

Selon une première famille on ajoute un agent d'acidification, tel que l'anhydride carbonique ou un acide minéral, à une solution aqueuse de silicate, l'on fait un arrêt après l'apparition de l'opalescence et l'on observe un temps de mûrissement avant de reprendre l'acidification du milieu, comme par exemple dans les procédés décrites dans FR-A-2 208 950 ou US-A-3 503 797.

Selon une seconde famille on réalise la première interruption d'acide au delà du point d'opalescence, entre l'opalescence et le gel, comme dans FR-A-2 159 580.

Enfin, l'on peut ne pas provoquer d'arrêt et réaliser une addition simultanée d'une solution de silicate alcalin et d'une solution d'acide dans une solution de silicate, comme par exemple dans FR-A-1 352 354.

Bien évidemment il existe de nombreuses variantes possibles de ces procédés qui permettent de contrôler les caractéristiques des silices, et la précédente énumération n'est pas du tout limitative du type de silice que l'on peut mettre en oeuvre dans le cadre de la présente invention.

Le procédé selon l'invention de manière étonnante permet d'obtenir les mêmes propriétés que si on mettait en oeuvre le même silane seul, ce qui se traduit au niveau du comportement par une amélioration de l'ensemble des propriétés dynamiques et statiques et en particulier de l'échauffement, de la déformation permanente, du module et de la résistance à l'abrasion.

De plus, selon l'invention, la quantité de silane peut être réduite à une proportion suffisamment faible de manière à conduire à un prix acceptable et à un niveau d'odeur supportable.

Mais la présente invention sera plus aisément comprise à l'aide des exemples suivants.

Le succinimide mis en oeuvre dans les exemples suivants est le résultat de la condensation de la tétraéthylène pentamine avec l'anhydride tétrapropenyl succinique préparé de la manière suivante:

Dans un ballon tricol de 2 litres équipé d'un agitateur mécanique, d'une ampoule à brome, d'un thermomètre et d'une tête de distillation suivie d'un condenseur et d'un récepteur, on verse 665 g d'anhydride tétrapropényl succinique (soit 2,5 moles) que l'on chauffe à 130° C.

On introduit alors en 30 min 189 g de tétraéthylène pentamine (soit 2 moles). Le mélange est porté à 160° C sous 3333 Pa de pression. Lorsque toute l'eau formée au cours de la réaction a distillé (3 heures) le mélange est refroidi.

L'analyse d'azote est la suivante:

théorie = 14%
mesuré = 13,8%

Par analyse infrarouge on remarque que toutes les fonctions anhydride succinique ont réagi et on note la présence des bandes caractéristique du groupement succinimide.

La silice est une silice de précipitation, commercialisée par la demanderesse sous la dénomination Zéosil 45® dont les caractéristique principales sont les suivantes:

| | |
|---|---|
| – perte au feu à 900° C | 12,5 au max. |
| – pH (5 g/100 cc) | 6,5 ± 0,3 |
| – surface BET | 200 m2/g |
| – diamètre des particules ultimes | ~ 20 nm |
| – prise d'huile DOP (dioctylphtalate) | au moins 300 |
| – particules collectées au tamis selon | cc/100 g |
| ASTM 80 mailles (%) | < 5% |

## Exemple 1

Le silane est du gamma-mercaptopropyle-triméthoxysilane commercialisé par Union Carbide sous la dénomination A 189.

Afin de mettre en évidence l'intérêt de la présente invention on a réalisé des essais en mélange caoutchouc, la mise en oeuvre a été réalisée dans un malaxeur interne BANBURY de 1 litre puis repris dans un malaxeur à cylindres.

Les tests suivants ont été faits:

### TESTS MECANIQUES, STATIQUES ET DYNAMIQUES

#### 1°) – Rhéomètre MONSANTO (ASTM D 2084)

Mesure les propriétés rhéologiques du mélange durant la vulcanisation.

– couple minimal (Cm): consistance du mélange non vulcanisé (mélange »cru«) à la température de l'essai.
– couple maximal (CM): consistance du mélange après réticulation.
– $\Delta$ couple: CM – Cm est en relation avec le taux de réticulation.
– Précocité: temps nécessaire pour démarrer la réticulation à la température de l'essai.
– indice: en relation avec la vitesse de vulcanisation (temps optimum – précocité).
– Temps optimum:

$$\text{Couple X} = \frac{(CM - Cm) \times 90}{100} + Cm.$$

$$\underset{\text{(ordnonnée)}}{\text{Couple X}} \longrightarrow \underset{\text{(abscisse)}}{\text{Y minutes}} = \text{Temps Optimum}.$$

Ces propriétés sont en particulier décrites dans l'Encyclopedia of Polymer Science and Technology volume 12 page 265 (Interscience Publishers – John Wiley & Sons, Inc.).

2°) – Propriétés statiques
Sont celles qui sont mesurées selon les normes:
a) – ASTM D 412 – 51 T
Résistance rupture Pa
Allongement %
Module
b) – ASTM D 2240-75
Dureté Shore A
c) – DIN 53516
Abrasion (résistance à l')
d) – Adhérence

SKID TESTER (selon Road Research laboratory Crowthorne Berkshire GB).

3°) – Propriétés dynamiques
ASTM D 623-67
Flexomètre Goodrich

Cet appareil permet de soumettre un vulcanisat à des déformations alternées et de déterminer sa tenue à la fatigue.

a) – compression statique (CS %): Déflexion sous charge constante.
b) – Déformation permanente (DP %): Pourcentage de déformation résiduaire après essai.
c) – Compression dynamique (CD %): % de déformation durant l'essai.
CDO: Compression dynamique en début d'essai.
CDF: Compression dynamique en fin d'essai.

$\Delta$ CD = CDF – CDO: évolution de la compression dynamique qui est en relation avec la tenue à la fatigue.

d) – $\Delta$ T.base: $\Delta$ T. entre la température à la surface de l'éprouvette (à sa base) et la température de la chambre.
e) – $\Delta$ T.coeur: $\Delta$ T. entre la température au coeur de l'éprouvette et la température de la chambre.
f) – conditions des essais:
charge 106 N (24 lbs), déflexion 22,2%, fréquence 21, 4 Hz
température de la chambre = 50° C.

Dans cet exemple on réalise une série d'essais en mettant en oeuvre la formule suivante:

| | |
|---|---|
| Copolymère butadième styrène étendu aux huiles +(SBR 1712) | 60,00 |
| Polybutadiène (BR 1220) | 40,00 |
| Silice | 60,00 |
| Huile aromatique (Dutrex 729 FC®) | 20,00 |
| Oxyde de zinc | 4,00 |
| Acide stéarique | 1,50 |
| N-isopropyl-N-phényl-N'-phénylène diamine (antioxygène PERMANAX IPPD®) | 1,50 |
| N-(dimethyl 1-3 butyl N'-phényl-p-phénylène diamine (antioxygène PERMANAX (6 PPD®) | 1,50 |
| Polyéthylène glycol (PEG 4000) | 3,00 |
| N-cyclohexyl-2-Benzothiozyl sulfenamide (Vulcafor CBS®) | 3,00 |
| Agent de couplage selon les essais (voir tableau 1) soufre | 2,80 |

L'ensemble des essais est résumé au tableau 1.

L'on voit que dans la série d'essais de 1 à 5 on étudie l'influence du silane comme agent de couplage, dans les essais 6 à 9 on note l'influence du succinimide seul, dans les essais 10 à 12 on apporte à la fois du succinimide et du silane de manière progressive, enfin les derniers essais 13 à 14 correspondent à une quantité plus grande de succinimide apporté.

Les tableaux 2 à 5 rassemblent l'ensemble des résultats pour chaque série d'essais.

Afin de faciliter l'interprétation des résultats, on a rassemblé les caractéristiques essentielles dans les tableaux comparatifs:

– de 0 à 4% de succinimide tableau 6
– de 0 à 4% de silane tableau 7
– combinaison silane – succinimide tableau 8
– combinaison silane – succinimide remarquables tableau 9.

TABLEAU 1

| | Essais 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Silanes % sur silice | 0 | 1 | 2 | 3 | 4 | 0 | 0 | 0 | 0 | 1 | 2 | 3 | 1 | 2 | 1 |
| Succinimide % sur silice | 0 | 0 | 0 | 0 | 0 | 1 | 2 | 3 | 4 | 1 | 1 | 1 | 2 | 2 | 3 |

TABLEAU 2

| | Essais 1 | | 2 | | 3 | |
|---|---|---|---|---|---|---|
| Silane (% sur silice) | 0 | | 1 | | 2 | |
| Succinimide (% sur silice) | 0 | | – | | – | |
| Rhéomètre à 150° C | | | | | | |
| Couple: Mini Maxi | 18,5–94,0 | | 16–96 | | 14,5–90,5 | |
| Δ Couples | 75,5 | | 80,0 | | 76,0 | |
| Précorité – Indice | 90mn 30s–3mn 15s | | 10mn–4mn | | 8mn–4mn 15s | |
| Optimum | 12mn 45s | | 14mn | | 12mn 15s | |
| | PROPRIETES STATIQUES | | | | | |
| | | σ | | σ | | σ |
| Résistance repture (1) | 94,3 | 5,7 | 101 | 9 | 119 | 1,1 |
| Dureté Shore A | 67 | – | 66 | – | 69 | – |
| Module à 100% A11. (1) | 15 | 0,8 | 21 | 1,5 | 27 | 0,9 |
| Module à 300% A11. (1) | 37 | 1,1 | 69 | 2 | 96 | 3 |
| Allongement % | 567 | 23 | 445 | 17 | 410 | 20 |
| Abrasion DIN (pertes) | 168 | – | 121 | – | 122 | – |
| Adhérence – piste humide SKID TESTER | 40 | – | 41 | – | 42 | – |
| FLEXOMETRE GOODRICH | | | | | | |
| Compression statique % (CS) | 11 | | 10 | | 9,9 | |
| Compression dynamique % origine (CDO) | 8 | | 3,55 | | 2,6 | |
| Compression dynamique % finale (CDF) | 9,8 | | 4,10 | | 3,1 | |
| Δ CDF – CDO | 1,8 | | 0,55 | | 0,5 | |
| Δ T. base ° C | 27 | | 20 | | 20,5 | |
| Δ T. coeur ° C | 105 | | 77,5 | | 75,0 | |
| Déformation permanente % | 5,05 | | 1,95 | | 1,95 | |

σ = écart type.
(1) exprimé en Pa, à multiplier par $10^5$.

TABLEAU 3

| | Essais 4 | | 5 | | 6 | |
|---|---|---|---|---|---|---|
| Silane (% sur silice) | 3 | | 4 | | – | |
| Succinimide (% sur silice) | – | | – | | 1 | |
| Rhéomètre à 150° C | | | | | | |
| Couple: Mini Maxi | 18,5–90,5 | | 18,5–90 | | 19–97 | |
| $\Delta$ Couples | 72,0 | | 71,5 | | 78 | |
| Précorité – Indice | 6mn 30s–2mn 45s | | 5mn 30s–3mn 15s | | 10mn–4mn 15s | |
| Optimum | 9mn 15s | | 8mn 45s | | 14mn 15s | |
| | PROPRIETES STATIQUES | | | | | |
| | | σ | | σ | | σ |
| Résistance rupture (1) | 153 | 3,2 | 151 | 6,1 | 80 | 4,4 4, |
| Dureté Shore A | 71 | – | 70 | – | 66 | – |
| Module à 100% All. (1) | 35 | 2,4 | 37 | 1,4 | 17 | 1,9 |
| Module à 300% All. (1) | 123 | 3,4 | 120 | 4 | 44,5 | 2,6 |
| Allongement % | 357 | 13 | 345 | 14 | 440 | 26,5 |
| Abrasion DIN (pertes) | 110 | – | 98 | – | 169 | – |
| Adhérence – piste humide SKID TESTER | 42 | – | 42 | – | 40 | – |
| FLEXOMETRE GOODRICH | | | | | | |
| Compression statique % (CS) | 9,6 | | 10,25 | | 11,0 | |
| Compression dynamique % origine (CDO) | 2,1 | | 2,3 | | 5,5 | |
| Compression dynamique % finale (CDF) | 2,4 | | 2,45 | | 7,3 | |
| $\Delta$ CDF – CDO | 0,3 | | 0,15 | | 1,8 | |
| $\Delta$ T. base ° C | 19,5 | | 19,0 | | 26 | |
| $\Delta$ T. coeur ° C | 70,5 | | 66,0 | | 97,5 | |
| Déformation permanente % | 1,8 | | 1,6 | | 4,05 | |

σ = écart type.
(1) exprimé en Pa, à multiplier par $10^5$.

TABLEAU 4

| | Essais 7 | | 8 | | 9 | |
|---|---|---|---|---|---|---|
| Silane (% sur silice) | 0 | | 0 | | 0 | |
| Succinimide (% sur silice) | 2 | | 3 | | 4 | |
| Rhéomètre à 150° C | | | | | | |
| Couple: Mini Maxi | 17,5–94 | | 15–93 | | 11–88,5 | |
| Δ Couples | 76,5 | | 78 | | 77,5 | |
| Précorité — Indice | 9 mn 30 – 4 mn | | 8 mn – 5 mn | | 6 mn 30 – 6 mn | |
| Optimum | 13 mn 30 s | | 13 mn 00 s | | 12 mn 30 s | |
| | PROPRIETES STATIQUES | | | | | |
| | | σ | | σ | | σ |
| Résistance rupture (1) | 88<br>8 | 3,6<br>3, | 77,5<br>7 | 4,5<br>4, | 83<br>8 | 4,7<br>4, |
| Dureté Shore A | 65 | – | 66 | – | 66 | – |
| Module à 100% All. (1) | 17 | 1 | 17 | 0,6 | 17,6 | 1 |
| Module à 300% All. (1) | 44,5 | 1,3 | 45,5 | 0,8 | 47 | 3,5 |
| Allongement % | 456 | 32 | 435 | 15 | 380 | 23 |
| Abrasion DIN (pertes) | 169 | – | 170 | – | 166 | – |
| Adhérence — piste humide SKID TESTER | 40 | – | | | | |
| FLEXOMETRE GOODRICH | | | | | | |
| Compression statique % (CS) | 10,9 | | 10,4 | | 12,3 | |
| Compression dynamique % origine (CDO) | 5,95 | | 5,55 | | 7,4 | |
| Compression dynamique % finale (CDF) | 8,25 | | 7,15 | | 9,2 | |
| Δ CDF — CDO | 2,30 | | 1,55 | | 1,80 | |
| Δ T. base ° C | 27,5 | | 27,0 | | 27,0 | |
| Δ T. coeur ° C | 104,5 | | 102,5 | | 100,0 | |
| Déformation permanente % | 4,35 | | 3,7 | | 3,5 | |

σ = écart type.
(1) exprimé en Pa, à multiplier par $10^5$.

TABLEAU 5

| | Essais 10 | | 11 | | 12 | |
|---|---|---|---|---|---|---|
| Silane (% sur silice) | 1 | | 2 | | 3 | |
| Succinimide (% sur silice) | 1 | | 1 | | 1 | |
| Rhéomètre à 150° C | | | | | | |
| Couple: Mini Maxi | 21–98 | | 20–92 | | 20–92 | |
| Δ Couples | 77 | | 72 | | 72 | |
| Précorité – Indice | 10mn 30s – 3mn45 | | 7mn – 3mn | | 6mn – 3mn | |
| Optimum | 14mn 15s | | 10mn | | 9mn | |
| PROPRIETES STATIQUES | | | | | | |
| | | σ | | σ | | σ |
| Résistance rupture (1) | 91 | 3,9 | 133 | 10 | 147 | 7 |
| Dureté Shore A | 70 | – | 69 | – | 70 | – |
| Module à 100% All. (1) | 22,5 | 1,7 | 27,3 | 1,3 | 36,7 | 2,4 |
| Module à 300% All. (1) | 62 | 2,1 | 110 | 3,5 | 127 | 3,8 |
| Allongement % | 365 | 26 | 340 | 11,5 | 330 | 13,5 |
| Abrasion DIN (pertes) | 131 | – | 123 | – | 108 | – |
| Adhérence – piste humide SKID TESTER | 41 | – | 41 | – | 42 | – |
| FLEXOMETRE GOODRICH | | | | | | |
| Compression statique % (CS) | 10,1 | | 9,7 | | 10,0 | |
| Compression dynamique % origine (CDO) | 3,4 | | 2,4 | | 2,05 | |
| Compression dynamique % finale (CDF) | 3,45 | | 2,5 | | 2,1 | |
| Δ CDF – CDO | ≃0 | | ≃0 | | ≃0 | |
| Δ T. base ° C | 22,5 | | 20,5 | | 19 | |
| Δ T. coeur ° C | 79,0 | | 68,5 | | 65 | |
| Déformation permanente % | 2,45 | | 1,9 | | 1,7 | |

σ = écart type.
(1) exprimé en Pa, à multiplier par $10^5$.

Continuation

| | Essais 13 | | 14 | | 15 | |
|---|---|---|---|---|---|---|
| Silane (% sur silice) | 1 | | 2 | | 1 | |
| Succinimide (% sur silice) | 2 | | 2 | | 3 | |
| Rhéomètre à 150° C | | | | | | |
| Couple: Mini Maxi | 20—92,5 | | 22—90,5 | | 20—90,5 | |
| Δ Couples | 72,5 | | 68,5 | | 70,5 | |
| Précorité — Indice | 7mn30—3mn30s | | 6mn—2mn45s | | 5mn30s—2mn30s | |
| Optimum | 11mn | | 8mn45s | | 8mn | |
| | PROPRIETES STATIQUES | | | | | |
| | | σ | | σ | | σ |
| Résistance rupture (1) | 119,5 | 6,8 | 138 | 9,3 | 132 | 5,1 |
| Dureté Shore A | 68 | — | 69 | — | 69 | — |
| Module à 100% All. (1) | 25 | 2 | 32 | 2,2 | 32 | 2,3 |
| Module à 300% All. (1) | 88 | 4 | 112 | 2,4 | 120 | 6 |
| Allongement % | 366 | 17 | 350 | 8,75 | 345 | 11,7 |
| Abrasion DIN (pertes) | 132 | — | 121 | — | 121 | — |
| Adhérence — piste humide SKID TESTER | 42 | — | 42 | — | 43 | — |
| FLEXOMETRE GOODRICH | | | | | | |
| Compression statique % (CS) | 10,1 | | 9,9 | | 10,3 | |
| Compression dynamique % origine (CDO) | 2,65 | | 2,5 | | 2,5 | |
| Compression dynamique % finale (CDF) | 2,90 | | 2,6 | | 2,5 | |
| Δ CDF — CDO | 0,25 | | ≃0 | | ≃0 | |
| Δ T. base ° C | 21,0 | | 20,0 | | 20,0 | |
| Δ T. coeur ° C | 73,0 | | 70,5 | | 67,0 | |
| Déformation permanente % | 2,10 | | 1,75 | | 1,45 | |

σ = écart type.
(1) exprimé en Pa, à multiplier par $10^5$.

TABLEAU 6

| Essais | Silane | Succin-imide | R/r (l) | Dureté Shore A | Module 300% (1) | Abrasion DIN | Adhérence piste humide | Δ CDF–CDO | Δ T. coeur | DP % | Odeur (silane) |
|---|---|---|---|---|---|---|---|---|---|---|---|
| 1 | 0 | 0 | 94,3 | 67 | 37 | 168 | 40 | + 1,8 | 105,0 | 5,05 | – |
| 6 | 0 | 1 | 80,0 | 66 | 44,5 | 169 | 40 | + 1,8 | 97,5 | 4,05 | – |
| 7 | 0 | 2 | 88,0 | 65 | 44,5 | 169 | 40 | + 2,3 | 104,5 | 4,35 | – |
| 8 | 0 | 3 | 77,5 | 66 | 45,5 | 170 | 40 | + 1,55 | 102,5 | 3,7 | – |
| 9 | 0 | 4 | 83 | 66 | 47,0 | 166 | 40 | + 1,8 | 100,0 | 3,5 | – |

TABLEAU 7

| Essais | Silane | Succin-imide | R/r (l) | Dureté Shore A | Module 300% (1) | Abrasion DIN | Adhérence piste humide | Δ CDF–CDO | Δ T. coeur | DP % | Odeur (silane) |
|---|---|---|---|---|---|---|---|---|---|---|---|
| 1 | 0 | 0 | 94,3 | 67 | 37 | 168 | 40 | + 1,8 | 105,0 | 5,05 | – |
| 2 | 1 | 0 | 101 | 66 | 69 | 121 | 41 | + 0,55 | 77,5 | 1,95 | Faible |
| 3 | 2 | 0 | 119 | 69 | 96 | 122 | 42 | + 0,5 | 75,0 | 1,95 | Moyenne |
| 4 | 3 | 0 | 153 | 71 | 123 | 110 | 42 | + 0,3 | 70,5 | 1,8 | Très forte |
| 5 | 4 | 0 | 151 | 70 | 120 | 98 | 42 | + 0,15 | 66,0 | 1,6 | violente |

(1) exprimé en Pa, à multiplier par $10^5$.

TABLEAU 8

| Essais | Silane | Succin-imide | R/r (I) | Dureté Shore A | Module 300% (1) | Abrasion DIN | Adhérence piste humide | Δ CDF—CDO | Δ T. coeur | DP % | Odeur (silane) |
|---|---|---|---|---|---|---|---|---|---|---|---|
| 1 | 0 | 0 | 94,3 | 67 | 37 | 168 | 40 | +1,8 | 105,0 | 5,05 | — |
| 2 | 1 | 0 | 101 | 66 | 69 | 121 | 41 | +0,55 | 77,5 | 1,95 | Faible |
| 10 | 1 | 1 | 94 | 70 | 62 | 131 | 41 | ~0 | 79,0 | 2,45 | Faible |
| 13 | 1 | 2 | 119,5 | 68 | 88 | 132 | 42 | +0,25 | 73,0 | 2,1 | Faible |
| 15 | 1 | 3 | 132 | 69 | 120 | 121 | 43 | ~0 | 67,0 | 1,45 | Faible |
| 3 | 2 | 0 | 119 | 69 | 96 | 122 | 42 | +0,5 | 75,0 | 1,95 | Moyenne |
| 11 | 2 | 1 | 133 | 69 | 110 | 123 | 41 | ~0 | 68,5 | 1,9 | Moyenne |
| 14 | 2 | 2 | 138 | 69 | 112 | 121 | 42 | ~0 | 70,5 | 1,75 | Moyenne |
| 4 | 3 | 0 | 153 | 71 | 123 | 110 | 42 | +0,3 | 70,5 | 1,8 | Très Forte |
| 12 | 3 | 1 | 147 | 70 | 127 | 108 | 42 | ~0 | 65,0 | 1,7 | Très Forte |

(1) exprimé en Pa, à multiplier par $10^5$.

TABLEAU 9

| Essais | Silane | Succin-imide | R/r (I) | Dureté Shore A | Module 300% (1) | Abrasion DIN | Adhérence µm piste humide | Δ CDF–CDO | Δ T. coeur | DP % | Odeur (silane) |
|---|---|---|---|---|---|---|---|---|---|---|---|
| 1 | 0 | 0 | 94,3 | 67 | 37 | 168 | 40 | + 1,8 | 105,0 | 5,05 | – |
| 4 | 3 | 0 | 153 | 71 | 123 | 110 | 42 | + 0,3 | 70,5 | 1,8 | Très Forte |
| 5 | 4 | 0 | 151 | 70 | 120 | 98 | 42 | + 0,15 | 66,0 | 1,6 | Violente |
| 12 | 3 | 1 | 147 | 70 | 127 | 108 | 42 | 0 | 65,0 | 1,7 | Très Forte |
| 15 | 1 | 3 | 132 | 69 | 120 | 121 | 43 | 0 | 67,0 | 1,45 | Faible |

(1) exprimé en Pa, à multiplier pat $10^5$.

En se référant aux tableaux 6, 7, 8 et 9, l'on remarque (tableau 7) que le silane a un effet positif considérable sur l'ensemble des caractéristiques mécaniques.

Avec 1% de silane on observe un gain notable sur le module à 300%, la perte à l'abrasion (−30%), le Δ CD, la DP et l'échauffement, et cette amélioration atteint son meilleur niveau d'ensemble avec 3% de silane, mais l'odeur est très forte.

Si l'on substitue le succinimide au silane (tableau 6) l'amélioration due à ce composé est inférieure à celle obtenue avec le silane seul, par contre si l'on substitue une parti du silane par le succinimide l'on observe un effet de synergie remarquable (tableau 8) qui se manifeste sur les caractéristiques essentielles telles que résistance rupture module, échauffement; cet effet est déjà remarquable avec 1% de silane ce qui permet d'avoir une odeur faible et acceptable et un excellent résultat est obtenu avec 3% de succinimide et 1% de silane.

Dans la suite du tableau 8 (essais: 3, 11, 14) on augmente la proportion de silane, on note une amélioration due au succinimide.

Enfin dans les deux derniers essais (4 et 12) on augmente la proportion de silane, l'addition de succinimide permet d'améliorer l'échauffement.

Il en ressort que l'addition de succinimide permet d'une manière générale de diminuer l'échauffement et de diminuer la viscosité mais que de manière surprenante il se produit une synergie avec le silane qui permet pour une zone de rapports critiques des améliorations spectaculaires.

C'est ce que met mieux encore en évidence le tableau 8 où l'on a rassemblé des essais à taux de silane élevé aux essais qui a donné les meilleurs résultats dans le cas présent (essai 15).

Cet exemple montre donc l'effet tout à fait inattendu et spectaculaire de la composition selon l'invention. Les rapports silane/succinimide ne sont bien entendu pas donnés de manière limitative puisque ces essais ont été conduits avec une formule donnée et un silane et un succinimide également déterminés.

## Exemple 2

Dans cet exemple en mettant en oeuvre toujours la même silice, le même succinimide et le même silane, l'on fait appel à un caoutchouc naturel.

La formule en parties, en poids est la suivante:

| | |
|---|---|
| Caoutchouc naturel SMR 5L | 100,00 |
| Acide stéarique | 1,50 |
| Oxyde de zinc | 4,00 |
| Antioxygène (PERMANAX I PPD®) | 1,50 |
| Antioxygène (PERMANAX 6 PPP®) | 1,50 |
| Vulcafor CBS® | 1,80 |
| Huile DUTREX 729 FC® | 20,00 |
| Silice | 60,00 |
| Polyéthylène glycol (PEG 4000) | 3,00 |
| Soufre | 2,80 |
| Silane et succinimide selon tableau 10 | |

La mise en oeuvre est faite de la même manière qu'à l'exemple 1.

TABLEAU 10

| | Essais | | | | | | | | | |
|---|---|---|---|---|---|---|---|---|---|---|
| | 16 | 17 | 18 | 19 | 20 | 21 | 22 | 23 | 24 | 25 |
| Succinimide % sur silice | 0 | 2 | 4 | 6 | 0 | 0 | 0 | 0 | 3 | 3 |
| Silane % sur silice | 0 | 0 | 0 | 0 | 1 | 2 | 3 | 4 | 1,0 | 1,5 |

Les résultats sont rassemblés dans les tableaux 11, 12 et 13.

On remarque que la combinaison succinimide-silane permet encore d'obtenir des résultats équivalents à ceux observés avec le silane seul.

## Exemple 3

Dans cet exemple, on fait appel au même succinimide, mais à un silane différent. Le silane utilisé est un mercapto-silane fixé sur un silicate de calcium synthétique à raison de 70% en poids de silane actif, commercialisé par Union Carbide sous le nom de DSC-18;

La formule utilisée est la la suivante en parties en poids:

| | |
|---|---|
| SBR 1500 | 100,00 |
| Huile aromatique (Dutrex 729 FC®) | 20,00 |
| Oxyde de zinc | 4,00 |
| Acide stéarique | 1,50 |
| Soufre | 2,80 |
| Permanax I PPD® | 1,50 |
| Permanax 6 PPD® | 1,50 |
| Vulcafor CBS® | 3,00 |
| Zéosil 45® | 60,00 |
| Silane | voir tableau 14 |

TABLEAU 11

| | Essais 16 | σ | 17 | σ | 18 | σ | 19 | σ |
|---|---|---|---|---|---|---|---|---|
| **ADDITIFS** | | | | | | | | |
| (% sur silice) Succinimide | 0,0 | | 2,0 | | 4,0 | | 6,0 | |
| **Rhéomètre à 150° C** | | | | | | | | |
| Couple: Mini Maxi | 24–91 | | 21–85 | | 16–83 | | 11–76 | |
| $\Delta$ Couples | 67 | | 64 | | 67 | | 65 | |
| Précocité – Indice | 7mn45s – 9mn30s | | 7mn – 8mn30s | | 4mn45s – 8mn30s | | 4mn45s – 8mn30s | |
| Temps de vulcanisation optimum | '17mn15s | | 15mn30s | | 13mn15s | | 13mn | |
| **PROPRIETES STATIQUES** | | σ | | σ | | σ | | σ |
| Résistance rupture (1) | 200 | 12,7 | 203 | 11,3 | 205 | 9 | 203 | 6,5 |
| Dureté Shore A | 72 | | 68 | | 68 | | 67 | |
| Module à 100% All. (1) | 13,7 | 0,3 | 14,7 | 1,2 | 14,2 | 0,8 | 13,7 | 1,4 |
| Module à 300% All. (1) | 30 | 1,4 | 34 | 1,5 | 33 | 2,8 | 30 | 3,7 |
| Allongement % | 728 | 20,5 | 715 | 16,5 | 722 | 32 | 734 | 37 |
| Déchirement kg/cm pantalon | 36,2 | 2,2 | 35,0 | 1,8 | 35,9 | 4,1 | 35,5 | 3,5 |
| Abrasion DIN (pertes) | 232 | | 235 | | 229 | | 251 | |

Continuation

| | Essais | | | |
|---|---|---|---|---|
| | 16 | 17 | 18 | 19 |
| **FLEXOMETRE GOODRICH** | | | | |
| C-24 lbs D-22,2%<br>F-21,4 Hz $\sigma$ – 50° C<br>Compression statique % | 10,0 | 10,3 | 10,2 | 11,9 |
| Compression Dynamique % origine | 14,1 | 11,3 | 11,0 | 11,2 |
| Compression Dynamiqie % fin | 39,4 | 28,4 | 21,5 | 20,7 |
| $\Delta$ CDF–CDO | 25,3 | 17,1 | 10,5 | 9,5 |
| $\Delta$ T. base | 73 | 45 | 33,5 | 27,0 |
| $\Delta$ T. coeur | → 150 | 128 | 105 | 94,0 |
| Déformation permanente % | 33,1 | 18,0 | 11,87 | 10,3 |

(1) exprimé en Pa, à multiplier par $10^5$.

TABLEAU 12

| | Essais 20 | σ | 21 | σ | 22 | σ | 23 | σ |
|---|---|---|---|---|---|---|---|---|
| ADDITIFS | | | | | | | | |
| (% sur silice) Silane | 1,0 | | 2,0 | | 3,0 | | 4,0 | |
| Rhéomètre à 150° C | | | | | | | | |
| Couple: Mini Maxi | 21–88 | | 15–78 | | 12,5–76 | | 13–76,5 | |
| Δ Couples | 67 | | 63 | | 63,5 | | 63,5 | |
| Précocité – Indice | 5 mn 30s – 7 mn 30s | | 4 mn 45 s – 5 mn 30 s | | 3 mn 30s – 6 mn 30s | | 2 mn 30s – 6 mn 30s | |
| Temps de vulcanisation optimum | 13 mn | | 10 mn 15 s | | 10 mn | | 9 mn | |
| PROPRIETES STATIQUES | | σ | | σ | | σ | | σ |
| Résistance rupture | 223 | 10 | 237 | 7,5 | 233 | 11,3 | 238 | 12,2 |
| Dureté Shore A | 72 | | 70 | | 68 | | 69 | |
| Module à 100% All. (1) | 16,6 | 1,6 | 20 | 2 | 19 | 2 | 17,6 | 1,7 |
| Module à 300% All. (1) | 57 | 3,7 | 65 | 4,7 | 66 | 5 | 65 | 3,5 |
| Allongement % | 735 | 14 | 736 | 22 | 671 | 33 | 655 | 16 |
| Déchirement kg/cm pantalon | 38,7 | 2,1 | 43,3 | 2,7 | 39,7 | 6,0 | 41,5 | 3,7 |
| Abrasion DIN (pertes) | 186 | | 184 | | 177 | | 163 | |

Continuation

| | Essais | | | |
|---|---|---|---|---|
| | 20 | 21 | 22 | 23 |
| FLEXOMETRE GOODRICH | | | | |
| C-24 lbs D-22,2% F-21,4 Hz σ – 50° C Compression statique % | 9,0 | 9,4 | 11,9 | 12,2 |
| Compression Dynamique % origine | 6,6 | 7,0 | 8,0 | 8,25 |
| Compression Dynamiqie % fin | 11,9 | 10,8 | 10,85 | 11,20 |
| Δ CDF–CDO | 5,3 | 3,8 | 2,85 | 2,95 |
| Δ T. base | 24,5 | 21,5 | 20,50 | 20,0 |
| Δ T. coeur | 89,0 | 87,0 | 79,5 | 76,5 |
| Déformation permanente % | 6,3 | 5,0 | 4,5 | 4,35 |

(1) exprimé en Pa, à multiplier par $10^5$.

TABLEAU 13

| | Essais 21 | | 25 | |
|---|---|---|---|---|
| Silane A 189 | 1,0 | | 1,5 | |
| Succinimide (% sur silice) | 3,0 | | 3,0 | |
| Rhéomètre à 150° C | | | | |
| Couple: Mini Maxi | 14,5–85,0 | | 14,0–80 | |
| Δ Couples | 70,5 | | 66 | |
| Précocité – Indice | 4mn45s – 7mn30s | | 4mn – 6mn30s | |
| Temps de vulcanisation optimum | 12mn15s | | 10mn30s | |
| | PROPRIETES STATIQUES | | | |
| | | σ | | σ |
| Résistance rupture (1) | 216 | 9 | 224 | 10 |
| Dureté Shore A | 69 | | 67 | |
| Module à 100% All. (1) | 16 | 1,2 | 17,6 | 1,5 |
| Module à 300% All. (1) | 53 | 2,6 | 56 | 4,5 |
| Allongement % | 697 | 27 | 706 | 32 |
| Déchirement kg/cm pentalon | 44,4 | 5,7 | 42,0 | 4,7 |
| Abrasion DIN (pertes) | 200 | | 199 | |
| FLEXOMETRE GOODRICH | | | | |
| C-24 lbs D-22,2% F-21,4 Hz σ – 50° C Compression statique % | 12,5 | | 13,5 | |
| Compression Dynamique % origine | 8,85 | | 8,7 | |
| Compression Dynamique % fin | 12,65 | | 11,7 | |
| Δ CDF–CDO | 3,8 | | 3,0 | |
| Δ T. base | 20,5 | | 19,0 | |
| Δ T. coeur | 81,0 | | 77,5 | |
| Déformation permanente % | 4,9 | | 4,6 | |

(1) exprimé en Pa, à multiplier pat $10^5$.

TABLEAU 14

| | Essais | | | |
|---|---|---|---|---|
| | 26 | 27 | 28 | 29 |
| ADDITIFS | | | | |
| DSC 18 (à 70% du produit actif) (1) | 0 | 1,0 | 3,0 | 1,0 |
| Succinimide (1) | 0 | 0 | 0 | 3,0 |
| Rhéomètre à 150° C | | | | |
| Couple: Mini Maxi | 20–116 | 185–116 | 15–115 | 13–108 |
| Δ Couples | 96 | 97,5 | 100 | 95 |
| Précocité – Indice | 7mn15s–10mn15s | 7mn45s–9mn | 6mn15s–7mn45s | 6mn45s–7mn15s |
| Temps de vulcanisation optimum | 17mn30s | 15mn45s | 14mn | 14mn |
| PROPRIETES STATIQUES | | | | |
| Résistance rupture (2) | 165 | 183 | 197 | 194 |
| Dureté Shore A | 72 | 75 | 75 | 72 |
| Module à 100% All. (2) | 19,6 | 30 | 33,8 | 26,5 |
| Module à 300% All. (2) | 44 | 92,6 | 109,7 | 78 |
| Allongement % | 560 | 46,7 | 493 | 57,4 |
| Déchirement kg/cm Pantalon | 27,8 | 24 | 16 | 27 |
| Abrasion DIN (pertes) | 214 | 165 | 150 | 184 |

Continuation

| | Essais | | | |
|---|---|---|---|---|
| | 26 | 27 | 28 | 29 |
| FLEXOMETRE GOODRICH | | | | |
| C-24 lbs D-22,2 %<br>F-21,4 Hz $\sigma$ – 50° C<br>Compression statique % | 8,6 | 8,15 | 8,25 | 9 |
| Compression dynamique % origine | 3,2 | 0,7 | 0,9 | 2,15 |
| Compression dynamique % fin | 6,0 | 1,15 | 0,9 | 2,65 |
| $\Delta$ CDF–CDO | 2,8 | 0,45 | 0 | 0,5 |
| $\Delta$ T. base | 34 | 25,5 | 25,5 | 28 |
| $\Delta$ T. coeur | 122 | 81,5 | 84,5 | 91 |
| Déformation permanente % | 4,5 | 2,55 | 2,6 | 2,25 |

(1) exprimé en % par rapport à la silice.
(2) exprimé en Pa, à multiplier par $10^5$.

On a reproduit au tableau 14 les résultats obtenus.

L'essai 26 correspond au témoin c'est-à-dire sans succinimide et sans silane.

On remarque que:

a) au rhéomètre le silane utilisé seul abaisse la viscosité par rapport au témoin et que la combinaison silane + succinimide a un effet plus important
b) le silane seul et la combinaison silane + succinimide améliorent les propriétés statiques et dynamiques.

Donc globalement l'incorporation de succinimide en combinaison et substitution partielle du silane permet d'abaisser considérablement la viscosité du mélange cru.

Cette combinaison permet d'abaisser la viscosité d'une façon plus importante que le silane seul, tout en maintenant au même niveau les caractéristiques pour un prix moindre.

### Exemple 4

Cet exemple est réalisé dans les mêmes conditions que le précédent sauf que l'on fait appel comme silane au tétrasulfure de bis-(3 triethoxysilylpropyle)(Silane SI 69). On fera donc référence au même témoin (essai 26).

Les résultats sont rassemblés au tableau 15.

TABLEAU 15

| | Essais | | |
|---|---|---|---|
| | 30 | 31 | 32 |
| ADDITIFS | | | |
| Silane SI 69 (1) | 1,0 | 2,5 | 5,0 |
| Succinimide (1) | 0 | 0 | 0 |
| Rhéomètre à 150° C | | | |
| Couple: Mini Maxi | 17,5–118 | 18–118 | 16,5–122 |
| Δ Couples | 100,5 | 100 | 105,5 |
| Précocité — Indice | 7mn30s–9mn30s | 7mn30s–9mn30s | 7mn–9mn |
| Temps de vulcanisation optimum | 17mn | 17mn | 16mn |
| PROPRIETES STATIQUES | | | |
| Résistance rupture (2) | 176 | 173 | 193 |
| Dureté Shore A | 74 | 76 | 78 |
| Module à 100% All. (2) | 30 | 33 | 42 |
| Module à 300% All. (2) | 89,5 | 102 | 135 |
| Allongement % | 512 | 473 | 439 |
| Déchirement kg/cm pantalon | 25,4 | 28,4 | 14,5 |
| Abrasion DIN (pertes) | 172 | 163 | 148 |

Continuation

| | Essais | | |
|---|---|---|---|
| | 30 | 31 | 32 |
| **FLEXOMETRE GOODRICH** | | | |
| C-24 lbs D-22,2 %<br>F-21,4 Hz $\sigma$ – 50° C<br>Compression statique % | 8,2 | 7,2 | 7,0 |
| Compression dynamique % origine | 0,9 | 0 | 0,8 |
| Compression dynamique % fin | 1,0 | 0 | 0,8 |
| $\Delta$ CDF–CDO | 0,1 | 0 | 0 |
| $\Delta$ T. base | 26 | 24 | 21 |
| $\Delta$ T. coeur | 87 | 83 | 69 |
| Déformation permanente % | 2,5 | 2,1 | 1,8 |

(1) exprimé en % par rapport à la charge.
(2) exprimé en Pa, à multiplier par $10^5$.

Continuation

| | Essais | | |
|---|---|---|---|
| | 33 | 34 | 35 |
| ADDITIFS | | | |
| Silane SI 69 (1) | 7,5 | 1,0 | 1,0 |
| Succinimide (1) | 0 | 3,0 | 4,0 |
| Rhéomètre à 150° C | | | |
| Couple: Mini Maxi | 13–102 | 15–110 | 12–102,5 |
| Δ Couples | 89 | 95 | 90,5 |
| Précocité – Indice | 7mn–8mn15s | 5mn45s–8mn30s | 5mn–8mn15s |
| Temps de vulcanisation optimum | 15mn15s | 14mn15s | 14mn15s |
| PROPRIETES STATIQUES | | | |
| Résistance rupture (2) | 159 | 187 | 182 |
| Dureté Shore A | 75 | 72 | 72 |
| Module à 100% All. (2) | 31 | 28 | 26 |
| Module à 300% All. (2) | 119 | 80 | 84 |
| Allongement % | 376 | 552 | 533 |
| Déchirement kg/cm pantalon | 3,0 | 45,9 | 19 |
| Abrasion DIN (pertes) | 143 | 184 | 179 |

Continuation

| | Essais 33 | 34 | 35 |
|---|---|---|---|
| FLEXOMETRE GOODRICH | | | |
| C-24 lbs D-22,2 %<br>F-21,4 Hz $\sigma$ – 50° C<br>Compression statique % | 8,1 | 8,35 | 8,8 |
| Compression dynamique % origine | 0 | 1,65 | 2,6 |
| Compression dynamique % fin | 0,15 | 1,95 | 3,0 |
| $\Delta$ CDF–CDO | 0,15 | 0,3 | 0,4 |
| $\Delta$ T. base | 21 | 26 | 28 |
| $\Delta$ T. coeur | 66,5 | 86,5 | 89,5 |
| Déformation permanente % | 1,5 | 2,8 | 2,5 |

(1) exprimé en % par rapport à la charge.
(2) exprimé en Pa, à multiplier par $10^5$.

On voit que ce silane seul permet d'abaisser la viscosité du mélange cru (essais 30 à 33), cependant les combinaisons 1 partie silane, 3 parties succinimide (essai 34) et 1 partie silane, 4 parties de succinimide (essai 35) abaissent autant ou davantage la viscosité que le silane seul ce qui est économiquement appréciable, tout en maintenant un niveau convenable quant aux propriétés statiques et dynamiques.

## Exemple 5

On utilise la même formule générale, mais on remplace 30 parties de silice par 30 parties de noir de carbone (Noir N 326), le silane est le gamma-mercaptopropyle-trimethoxysilane (A 189) et le même succinimide qu'aux exemples précédents.

Les résultats sont rassemblés au tableau 16.

On observe que:

- au rhéomètre les caractéristique ne sont pas modifiées de façon sensible en fonction des combinaisons silane et succinimide
- même observation en ce qui concerne les propriétés statiques
- propriétés dynamiques: La combinaison 1 partie silane, 3 parties succinimide permet d'obtenir un échauffement et une déformation permatents inférieurs à ceux obtenus avec 1 silane, en outre cette combinaison (1 silane, 3 succinimides) est également sensiblement meilleure que la combination 3% de silane.

En conclusion de manière inattendue, dans le mélange contenant du Noir et de la Silice le comportement de la combinaison 1 silane-3 succinimide conduit en ce qui concerne les propriétés dynamiques aux mêmes conclusions que pour des mélanges ne contenant que de la silice. Les caractéristiques dynamiques sont améliorées par rapport à 1 et à 3% de silane seul avec les avantages é économiques déjà signalés.

TABLEAU 16

| | Essais | | |
|---|---|---|---|
| | 36 | 37 | 38 |
| ADDITIFS | | | |
| SILANE A 189 (1) | 1 | 3 | 1 |
| Succinimide (1) | 0 | 0 | 3 |
| Rhéomètre à 150° C | | | |
| Couple: Mini Maxi | 10,5–84,0 | 10,0–83,0 | 9,5–82,5 |
| Δ Couples | 73,5 | 73 | 73 |
| Précocité – Indice | 11 mn 15s – 8 mn | 10 mn 30s – 6 mn 30s | 16 mn 15s – 7 mn |
| Temps de vulcanisation optimum | 19 mn 15s | 17 mn | 16 mn 15s |
| PROPRIETES STATIQUES | | | |
| Résistance rupture (2) | 202 | 206 | 216 |
| Dureté Shore A | 68 | 67 | 67 |
| Module à 100% All. (2) | 26 | 25,5 | 27 |
| Module à 300% All. (2) | 90 | 86,5 | 90 |
| Allongement % | 570 | 570 | 580 |
| Déchirement kg/cm pantalon | 33 | 39 | 36 |
| Abrasion DIN (pertes) | 153 | 137 | 142 |

Continuation

| | Essais 36 | 37 | 38 |
|---|---|---|---|
| **FLEXOMETRE GOODRICH** | | | |
| C-24 lbs D-22,2 %<br>F-21,4 Hz $\sigma$ – 50° C<br>Compression statique % | 13,55 | 13,5 | 14,15 |
| Compression dynamique % origine | 5,1 | 5,0 | 5,55 |
| Compression dynamique % fin | 5,45 | 5,1 | 5,50 |
| $\Delta$ CDF—CDO | 0,35 | + 0,1 | # 0 |
| $\Delta$ T. base | 32,5 | 30,5 | 30,0 |
| $\Delta$ T. coeur | 98,5 | 95,0 | 93 |
| Déformation permanente % | 3 | 2,7 | 2,6 |

(1) exprimé en % par rapport à la charge.
(2) exprimé en Pa, à multiplier par $10^5$.

Exemple 6

Dans cet exemple on apporte le succinimide sur rapport silice. On utilise la formule suivante, en parties, en poids:

| | |
|---|---|
| CAOUTCHOUC NATUREL SMR 5L | 100,00 |
| ACIDE STEARIQUE | 1,50 |
| OXYDE DE ZINC | 4,00 |
| ANTIOXYGENE (PERMANAX 6PPD®) | 1,50 |
| ANTIOXYGENE (PERMANAX IPPD®) | 1,50 |
| VULCAFOR CBS® | 1,80 |
| HUILE DUTREX® | 20,00 |
| SILICE PRECIPITEE (de surface BET = 172 $m^2/g$) | 60,00 |
| POLYETHYLENE GLYCOL (PEG 4 000) | 3,00 |
| SOUFRE | 2,80 |
| SILANE | Voir Tableau 17 |
| SUCCINIMIDE | Voir Tableau 17 |

Les résultats sont résumés au tableau 17. On voit que le fait d'apporter le succinimide sur support silice n'altère pas son efficacité.

Le succinimide est un produit très visqueux difficile à mettre en oeuvre tel quel.

Afin de pallier cet inconvénient il a été placé sur un support siliceux dans les proportions:

- 66% de succinimide
- 33% de support siliceux.

Il apparait que la mise sur support n'altère pas le pouvoir du produit selon l'invention.

TABLEAU 17

BANBURY – SIMPLE MALAXAGE

| | Essais | | | |
|---|---|---|---|---|
| | 39 | 40 | 41 | 42 |
| Silane A 189 sur Silice | 0,0 | 3,0 | 1,0 | 0,0 |
| Succinimide en % de produit actif | 0,0 | 0,0 | 3,0 (I) | 4,0 (2) |
| Rhéomètre Monsanto à 150° C | | | | |
| Couple minimal | 24,0 | 15,0 | 14,5 | 15,5 |
| Couple maximal | 81,0 | 68,0 | 77,5 | 75,0 |
| Δ Couples | 57,0 | 53,0 | 63,0 | 59,5 |
| Précocité = T + 2 | 8,0 | 3,25 | 4,0 | 4,75 |
| Indice = T. 90 – T. 2 | 11,5 | 9,25 | 8,75 | 9,75 |
| Optimum = T. 90 | 19,5 | 12,5 | 12,75 | 14,5 |
| Résistance rupture M.Pa | 20,1 | 22,7 | 23,1 | 21,4 |
| Dureté Shore A | 66 | 62 | 65 | 62 |
| Module 100% All. M.Pa | 1,5 | 2,0 | 1,9 | 1,7 |
| Module 300% All. M.Pa | 3,5 | 5,6 | 4,9 | 4,0 |
| Allongement % | 672 | 679 | 690 | 684 |
| Déchirement pantalon kg/cm | 52 | 44 | 65 | 65 |
| Abrasion DIN | 285 | 204 | 225 | 276 |
| Propriétés dynamiques<br>Essai au Flexomètre GOODRICH | | | | |
| Compression Statique % | 13,3 | 12,7 | 11,3 | 12,2 |
| Compression Dynamique Origine % | 14,7 | 10,8 | 9,1 | 12,1 |
| Compression Dynamique Finale % | 11,3 | 14,8 | 14,4 | 25,7 |
| Δ CDF–CDO % | 2,1 | 4,0 | 5,3 | 13,6 |
| Echauffement | | | | |
| Δ T. base 0° C | >60 | 23 | 23,5 | 34 |
| Δ T. coeur | >150 | 83,5 | 87,5 | 107,5 |
| Déformation permanente % | 22,5 | 6,9 | 7,1 | 12,3 |

(I) 3% en produit actif soit 4,5% en produit sur support silice.
(2) 4% en produit actif soit 6% en produit sur support silice.

**Revendications**

1. Procédé de couplage entre un élastomère et une charge notamment à base d'un composé de la silice, caractérisé par le fait que l'on met en oeuvre au moins un silane et au moins un succinimide.
2. Procédé selon la revendication 1, caractérisé par le fait que les succinimides sont à base d'alcényl succinimides obtenus par condensation d'un polyamine sur un anhydride alcényl succinique dont le radical alcényle contient de 3 à 100, et de préférence de 3 à 12 atomes de carbone.
3. Procédé selon la revendication 2, caractérisé par le fait que les polyamines mises en oeuvre sont du groupe des polyalkylène amines dont les radicaux alkylène sont linéaires ou ramifiés et contiennent de 2 à 12 atomes de carbone, lesdites polyalkylène amines étant éventuellement substituées sur l'azote par un ou plusieurs radicaux hydroxyalkyles ou aminoalkyles.
4. Procédé selon la revendication 2, caractérisé par le fait que les polyamindes mises en oeuvre sont du groupe des polyoxaalkylène amines dont les radicaux oxaalkylènes sont linéaires ou ramifiés et contiennent de 2 à 3 atomes de carbone.
5. Procédé selon l'une des revendications 2 à 5, caractérisé par le fait que l'anhydride alcénylsuccinique présente un radical alcényle qui dérive d'une monooléfine en $C_3-C_{30}$, d'un oligomère ou d'un polymère d'une monooléfine en $C_2-C_{30}$, ou d'un copolymère desdites oléfines entre elles ou avec des comonomères diénique ou vinylaromatiques.
6. Procédé selon la revendication 5, caractérisé par le fait que l'anhydride alcényl succinique est dérivé d'oligomères ou de polymères de l'éthylène, du propylène, du butène-1, de l'isobutène, du cyclohexyl-3 butène-1, du méthyl-2 propyl-5 hexène-1.
7. Procédé selon l'une des revendications de 1 à 6, caractérisé par le fait que les silanes répondent à la formule:

$$R'-Si(OR)_3$$

dans laquelle:

R' = groupe organique réactif mercapto ou azo, généralement rellé par une courte chaine alkylène à l'atome de silicium.
OR = groupes alkoxy hydrolysables.

8. Procédé selon la revendication 7, caractérisée par le fait que le silane est du gamma-mercapto propyl-triméthoxy-silane.

**Patentansprüche**

1. Verfahren zur Kupplung eines Elastomeren und eines Füllstoffes, insbesondere auf der Basis einer Verbindung der Kieselsäure, dadurch gekennzeichnet, daß man mindestens ein Silan und mindestens ein Succinimid einsetzt.
2. Verfahren nach Anspruch 1, dadurch gekennzeichnet, daß man Succinimide auf der Basis von Alkenylsuccinimiden einsetzt, die durch Kondensation eines Polyamins mit einem Alkenylbernsteinsäureanhydrid erhalten worden sind, dessen Alkenylgruppe 3 bis 100, vorzugsweise 3 bis 12 Kohlenstoffatome enthält.
3. Verfahren nach Anspruch 2, dadurch gekennzeichnet, daß man Polyamine aus der Gruppe der Polyalkylenamine einsetzt, deren Alkylengruppen linear oder verzweigt sind und 2 bis 12 Kohlenstoffatome enthalten, wobei die Polyalkylenamine gegebenenfalls am Stickstoff durch eine oder mehrere Hydroxyalkyl- oder Aminoalkylgruppen substituiert sind.
4. Verfahren nach Anspruch 2, dadurch gekennzeichnet, daß man Polyamine aus der Gruppe der Polyoxaalkylenamine einsetzt, deren Oxaalkylengruppen linear oder verzweigt sind und 2 oder 3 Kohlenstoffatome enthalten.
5. Verfahren nach einem der Ansprüche 2 bis 4, dadurch gekennzeichnet, daß das Alkenylbernsteinsäureanhydrid eine Alkenylgruppe aufweist, die von einem $C_3-C_{30}$-Monoolefin, einem Oligomeren oder einem Polymeren eines $C_2-C_{30}$-Monoolefins oder von einem Copolymeren dieser Olefine untereinander oder mit Diencomonomeren oder vinylaromatischen Comonomeren abgeleitet ist.
6. Verfahren nach Anspruch 5, dadurch gekennzeichnet, daß das Alkenylbernsteinsäureanhydrid von Oligomeren oder Polymeren des Ethylens, Propylens, Buten-1, Isobuten, 3-Cyclohexylbuten-1, 2-Methyl-5-propylhexen-1 abgeleitet ist.
7. Verfahren nach einem der Ansprüche 1 bis 6, dadurch gekennzeichnet, daß die Silane der Formel

$$R'-Si(OR)_3$$

entsprechen, in der

R′ eine reaktionsfähige organische Mercapto- oder Azogruppe ist, die allgemein durch eine kurze Alkylenkette mit dem Siliciumatom verbunden ist, und
OR hydrolysierbare Alkoxygruppen bedeuten.

8. Verfahren nach Anspruch 7, dadurch gekennzeichnet, daß das Silan γ-Mercaptopropyl-trimethoxysilan ist.

**Claims**

1. A process for coupling between an elastomer and a filler, in particular one based on a silicia compound, characterised in that the least one silane and at least one succinimide are used.

2. A process according to claim 1 characterised in that the succinimides are based on alkenyl succinimides obtained by condensation of a polyamine on an alkenyl succinic anhydride, in which the alkenyl radical contains from 3 to 100 and preferably from 3 to 12 carbon atoms.

3. A process according to claim 2 characterised in that the polyamines used are from the group of polyalkylene amines in which the alkylene radicals are straight or branched chain and contain from 2 to 12 carbon atoms, said polyalkylene amines possibly being substituted on the nitrogen by one or more hydroxyalkyl or aminoalkyl radicals.

4. A process according to claim 2 characterised in that the polyamines used are from the group of polyoxaalkylene amines in which the oxaalkylene radicals are straight or branched chain und contain from 2 to 3 carbon atoms.

5. A process according to one of claims 2 to 4 characterised in that the alkenyl succinic anhydride has an alkenyl radical derived from a $C_3-C_{30}$ mono-olefin, an oligomer or a polymer of a $C_2-C_{30}$ mono-olefin, or a copolymer of said olefins with each other or with dienic or vinyl aromatic co-monomers.

6. A process according to claim 5 characterised in that the alkenyl succinic anhydride is derived from oligomers or polymers of ethylene, propylene, but-1-ene, isobutene, 3-cyclohexyl but-1-ene, or 2-methyl-5-propyl he-1-ene.

7. A process according to one of claims 1 to 6 characterised in that the silanes are of the following formula:

$$R'-Si(OR)_3$$

in which:

R′ = a reactive organic mercapto or azo group which is generally bonded to the silicon atom by a short alkylene chain,
OR = hydrolysable alkoxy groups.

8. A process according to claim 7 characterised in that the silane is gamma-mercapto propyl trimethoxy silane.